# EUROPEAN PATENT SPECIFICATION

(11) **EP 3 796 418 B1**
(45) Date of publication and mention of the grant of the patent: **31.07.2024**
(21) Application number: 19802545.4
(22) Date of filing: 06.05.2019
(51) Int. Cl.: H01M 50/454, H01M 50/431

(54) **BATTERY, AND BATTERY DIAPHRAGM AND MANUFACTURING METHOD THEREFOR**
BATTERIE, BATTERIE-MEMBRAN UND HERSTELLUNGSVERFAHREN DAFÜR
BATTERIE ET DIAPHRAGME DE BATTERIE, ET SON PROCÉDÉ DE FABRICATION

(30) Priority: 16.05.2018 CN 201810471842
(43) Date of publication of application: 24.03.2021
(73) Proprietor: Shenzhen Senior Technology Material Co., Ltd., Shenzhen, Guangdong 518106 (CN); Jiangsu Senior New Material Technology Co., Ltd, Changzhou, Jiangsu 213100 (CN)
(72) Inventor: WANG, Yanjie, Shenzhen, Guangdong 518106 (CN); YANG, Xuemei, Shenzhen, Guangdong 518106 (CN); TAN, Bin, Shenzhen, Guangdong 518106 (CN); WU, Zhijie, Shenzhen, Guangdong 518106 (CN)
(74) Representative: Locas, Davide
(86) International application number: PCT/CN2019/085704
(87) International publication number: WO 2019/218888

(56) References cited:
- CN-A- 102 769 116
- CN-A- 104 157 812
- CN-A- 105 140 451
- CN-A- 105 529 425
- CN-A- 106 684 298
- CN-A- 107 342 386
- CN-A- 107 565 081
- CN-A- 107 565 081
- CN-A- 107 785 522
- CN-A- 108 630 871

## Description

### Cross-Reference to Related Applications

This application claims priority to Chinese Patent Application No. 2018104718423, filed with the Chinese Patent Office on May 16, 2018, entitled "Battery, And Battery Diaphragm and Manufacturing Method Thereof".

### Technical Field

The present disclosure relates to the field of batteries, and in particular to a battery, a battery separator (or diaphragm), and a method for manufacturing the same.

### Background Art

The lithium ion battery is a secondary battery currently widely applied. The lithium ion battery operates mainly by movement of lithium ions between positive and negative electrodes. Li⁺ is reversibly intercalated into and deintercalated from the two electrodes during charging and discharging processes. During the charging, Li⁺ is deintercalated from the positive electrode and intercalated into the negative electrode through an electrolyte so that the negative electrode is in a lithium-rich state. Moreover, higher charging capacity is obtained when more lithium ions are intercalated into the negative electrode. During the discharging, on the contrary, the lithium ions intercalated into a carbon layer of the negative electrode are deintercalated therefrom and then move back to the positive electrode through the electrolyte. Higher discharging capacity is obtained when more lithium ions move back to the positive electrode.

The lithium ion batteries have the advantages such as high operating voltage of unit cells, high specific energy, long cycle life, low self-discharge, no pollution, and no memory effect. Therefore, they are widely applied to mobile phones, portable devices, automobiles, aviation, scientific research, entertainment, military, and other modern electronic fields and are gradually replacing conventional batteries.

A lithium ion battery is mainly composed of four major materials, including a positive electrode material, a negative electrode material, a separator, and an electrolyte. As one of its important constituent parts, the separator plays a very important role in terms of the battery's performance. The battery separator refers to a layer of diaphragm material between the positive and negative electrodes of the battery, and is usually called a battery separator. The main function of the battery separator is to isolate the positive and negative electrodes from each other and to prevent electrons in the battery from freely passing therethrough, while allowing ions in the electrolyte to pass freely between the positive and negative electrodes.

For example, CN107342386A discloses a preparation method of a high-temperature-resistant low-resistivity lithium ion battery diaphragm, and belongs to the technical field of battery diaphragms. A slurry layer is coated on one side end face or two side end faces of a basal membrane; then, after the slurry layer is dried, the high-temperature-resistant low-resistivity lithium ion battery diaphragm is obtained; the slurry layer is ceramic slurry or carbon nano tube modified ceramic slurry; and furthermore, the carbon nano tube modified ceramic slurry is at least coated on one side end face of the basal membrane.

For example, CN106684298A describes a lithium-ion battery separator which comprises a positive insulating layer, a negative insulating layer and a porous conductive layer arranged between the positive insulating layer and the negative insulating layer, wherein the porous conductive layer is at least one of a graphene layer, a carbon fiber layer, a carbon nanotube layer and a conductive carbon layer.

For example, CN107565081A relates to a hydroxyapatite super-long nanowire-based high-temperature-resistant battery diaphragm which comprises 0.1-100wt% of hydroxyapatite super-long nanowire, 0-30wt% of inorganic additive and 0-50wt% of fiber additive, preferably, 1-99wt% of hydroxyapatite super-long nanowire, 0-30wt% of inorganic additive and 1-50wt% of fiber additive, that improves the electrolyte wettability and absorptivity of the battery diaphragm, and reinforces the performance and the safety of the battery.

The ion conductivity of the battery separator is directly related to the overall performance of the battery. Its function of isolating the positive and negative electrodes from each other allows for a limited increase in current in case of overcharging or temperature increment of the battery, thereby preventing explosion of the battery caused by short circuit of the battery. The battery separator has a protective function due to its self-closable micropores to safely protect a user and a device using the battery. Polyolefin materials are widely used for making a microporous separator because of their advantages such as low price, good mechanical strength and chemical stability, good overall performance, and low cost. However, their further applications to batteries are restricted due to their shortcomings in thermal stability.

The information disclosed in the Background Art section is only intended to facilitate understanding of the overall background art of the present disclosure, and shall not be deemed as admitting or implying in any form that the information constitutes the prior art well known to those skilled in the art.

### Summary

The present disclosure provides a battery separator as defined in claim 1, preferred embodiments are defined in dependent claims 2 and 3.

The present disclosure further provides a method for manufacturing the battery separator as defined in claim 4, preferred embodiments are defined in dependent claims 5-7.

The present disclosure further discloses a battery as defined in claim 8, preferred embodiments are defined in dependent claims 9 and 10.

### Advantageous Effects:

The battery separator according to the present disclosure has a composite structure, which is an innovation over the prior art battery separators and is improved in terms of thermal stability by using a modification material. Further, the modification material is used in the form of nanowires. This can avoid the problem of an increase in thickness and weight of the separator caused by the introduction of the modification material, thereby achieving effects of thermal stability and less increment of thickness and weight of the battery separator.

### Brief Description of Drawings

In order to more clearly illustrate technical solutions of embodiments of the present disclosure, drawings required for use in the embodiments will be described briefly below.

It is to be understood that the drawings below are merely illustrative of some embodiments of the present disclosure, and therefore should not be considered as limitations on its scope. It will be understood by those of ordinary skill in the art that other relevant drawings can also be obtained from these drawings without any inventive effort.
FIG. 1 is a schematic structural view of a first battery separator according to an embodiment of the present disclosure;
FIG. 2 is a schematic structural view of a second battery separator according to an embodiment of the present disclosure;
FIG. 3 is a schematic structural view of a film formation apparatus for making the second battery separator according to an embodiment of the present disclosure;
FIG. 4 shows a schematic structural view, from a first perspective, of a dip coating roller of the film formation apparatus of FIG. 3;
FIG. 5 shows a schematic structural view, from a second perspective, of the dip coating roller of the film formation apparatus of FIG. 3; and
FIG. 6 is a schematic sectional structural view of the dip coating roller of the film formation apparatus of FIG. 3 taken along an axial direction.

Reference Numerals: 100-first element; 200-second element; 300-porous structure; 401-storage tank; 402-tensioning system; 403-dip coating roller; 4031-hollow cavity; 4032-pore channel.

### Detailed Description of Embodiments

In order to further clarify the objects, technical solutions, and advantages of the embodiments of the present disclosure, the technical solutions of the embodiments of the present disclosure will be described below clearly and completely with reference to the drawings of the embodiments of the present disclosure. It is apparent that the embodiments to be described are some, but not all of the embodiments of the present disclosure. Generally, the components of the embodiments of the present disclosure, as described and illustrated in the figures herein, may be arranged and designed in a wide variety of different configurations. Thus, the following detailed description of the embodiments of the present disclosure, as represented in the figures, is not intended to limit the scope of the present disclosure as claimed, but is merely representative of selected embodiments of the present disclosure.

In the prior art, battery separators, especially polyolefin separators applied to lithium ion batteries (including primary batteries and secondary batteries), often have defects of poor thermal stability. It is often necessary to make an improvement on the basis of prior art separators in order to modify the separators to improve their thermal stability. In practice, the inventors have found that coating the surfaces of the prior art (battery) separators with inorganic materials such as aluminum oxide is a simple and efficient method that can improve the thermal stability of the separators.

However, the inventors have also found that the prior art coating method would cause adverse effects to some characteristics of an adjusted separator, for example, a significant increase in thickness and weight, which in turn leads to a decrease in the performance of the separator when in use.

In this embodiment, a material capable of improving the thermal stability of a separator is used in the form of nanowires and loaded on the original material of the separator, in order to achieve both desired thermal stability of the separator and no significant increase in thickness and weight of the separator. In this embodiment, one-dimensional nanowires are used as the coating material (e.g., achieved by coating). The one-dimensional nanowires have much smaller sizes and densities than inorganic materials, and thus they can be controlled to a smaller thickness.

In addition, the one-dimensional nanowires have the potential to impart new characteristics to the separator or improve the existing characteristics of the separator due to their unique structural features and interface effects.

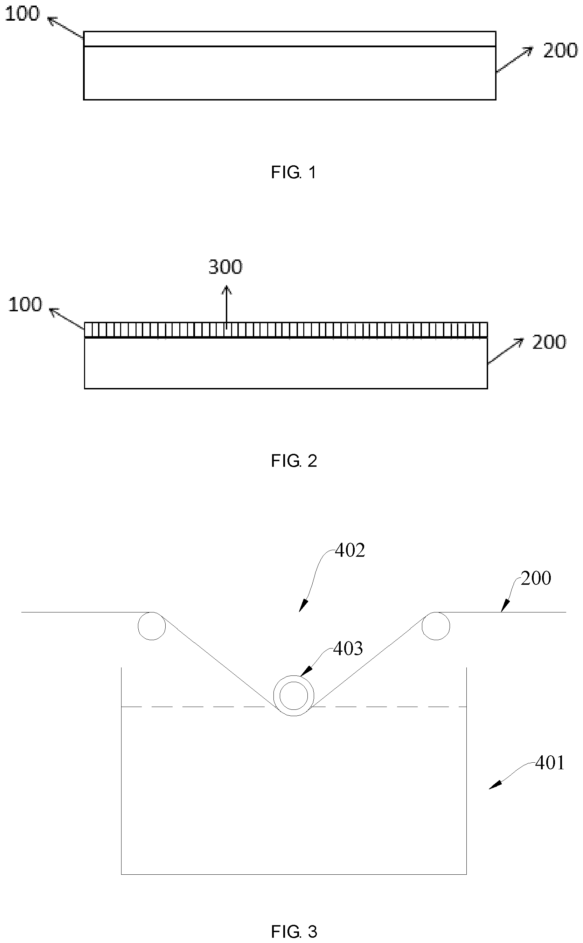

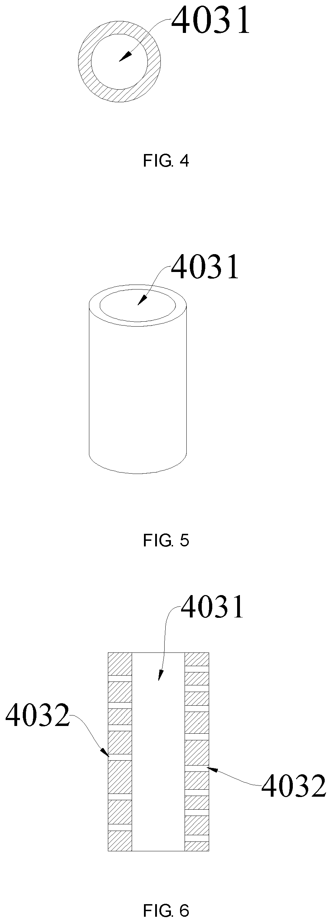

Reference can be made to FIGS. 1 to 6.

As shown in FIG. 1, this embodiment provides a battery separator which is a multi-layered composite combination. The battery separator has a composite structure including a first element 100 and a second element 200. Further, the above structure of the battery separator may be modified as required. For example, in FIG. 2, the battery separator has a composite structure including the first element 100 and the second element 200, and meanwhile the first element has a porous structure 300 having a plurality of pores.

In addition, it should be appreciated that FIGS. 1 and 2 merely schematically show the structure of the battery separator, but the absolute thickness of the first element, the absolute thickness of the second element, and the relative magnitude and ratio relations between the thicknesses of the two elements may not be determined according to the dimensions and scale illustrated in the figures. However, the thickness of the first element of the battery separator is significantly smaller than the thickness of the second element.

The first element has a thickness of 0.01 to 0.8 micrometer (µm), or the thickness of the first element is selected from any value of 0.03 µm, 0.05 µm, 0.08 µm, 0.1 µm, 0.4 µm, 0.6 µm, 0.8 µm, or any numerical value in a range determined between any two of the above values. Furthermore, the thickness of the first element may be standardized and verified according to specific product parameter requirements and test effects, and is not specifically limited in the embodiments of the present disclosure.

Further, the first element is formed by nanowires. Therefore, based on difference in properties of the first element and the nanowires and the difficulty levels of the methods for manufacturing the same, in combination with the consideration of the performance of the battery separator, the size of the nanowires is defined as below. The nanowire has a length-to-diameter ratio of greater than 50, for example, a length-to-diameter ratio of 146, 138, 127, or the like. Further, the length-to-diameter ratio of the nanowire may be adjusted by controlling a proper length and diameter of the nanowire. The nanowire has a diameter of 1 to 100 nm and a length of 0.1 to 100 µm. In some specific optional examples, the nanowire has a diameter of 100 nm and a length of 5 µm.

The material of the battery separator may be selected from many choices and may be selected depending on specific practical situations.

Here, the first element is made of a modification material provided to improve the thermal stability of the separator, and the first element is a stack of nanowires distributed in one or more layers. Generally, in terms of macroscopic morphology, the first element is present in the form of a thin film (film layer, diaphragm) and has a thickness of the order of sub-microns or microns as described previously.

In addition, the aforementioned first element is a stack of nanowires, While the stack of nanowires may exist in various ways. For example, the first element may be a single-layer stacked structure having a thickness equal to a nanowire diameter, wherein the nanowires are arranged in an array. In the longitudinal direction, the nanowires in the same column are arranged in sequence in an end-to-end manner. In the transverse direction, multiple columns of nanowires are arranged side by side. Optionally, in some examples, the nanowires are stacked in a criss-crossed manner. Optionally, in some other examples, the nanowires are stacked in a randomly crossed manner. The stacking of the nanowires may be defined by the method for manufacturing the battery separator, which is not specifically limited in the embodiments of the present disclosure. Further, a stack composed of nanowires may have two layers, three layers, or even more layers, and each layer may be made by the same or a different method and stacked in the same or a different form.

The first element produced by a stack appropriately formed by nanowires has the characteristics of high porosity, uniform pore size, light weight, and high strength. Therefore, the nanowire coating has the characteristics of thin thickness and light weight while solving the problem of thermal stability of polyolefin separators, which is in conformity with the development direction of lightweight and high energy of batteries.

In addition, the aforementioned first element having pores may be formed by stacking nanowires on the second element. In other words, the poress may be formed without being produced artificially and actively in the process of manufacturing the battery separator, or the poress may also be considered to be purposefully controlled (distribution density, distribution mode, pore size) and formed. The formation of the poress, such as in terms of pore size, porosity, and so on, is controlled so as to adjust the effect of the battery separator having the first element and the second element on the movement of ions when the battery separator is used in a battery.

In light of the above, the modification material is selected from one or more of carbon nanotubes, silver nanowires, boron carbide nanowires, nanocellulose, copper hydroxide nanowires, silicon monoxide nanowires.

The second element is made of a base (or substrate) material provided as a main body of the separator, and the first element is loaded on the second element and supported by the second element. It should be noted that the aforementioned main body of the separator may be the separator itself in the prior art battery separator technology. In this embodiment, a separator for isolating electrons and allowing ions to pass therethrough is provided and used as a main body and exerts its corresponding effects on electrons and ions.

As described previously, there are many choices for the modification material for making the first element. Correspondingly, the base material for making the second element is selected from polyolefins, such as polyethylene (PE), polypropylene (PP), etc.

Based on the above battery separator, an embodiment of the present disclosure further provides a battery, which may be a primary battery or a secondary battery, and may, for example, be a rechargeable lithium ion battery. The battery has a housing in which the above-mentioned battery separator and positive and negative electrodes separated by the battery separator are disposed. A positive electrode region is formed between the positive electrode and the battery separator, and a negative electrode region is formed between the negative electrode and the battery separator. The same electrolyte is injected into the positive electrode region and the negative electrode region.

In an embodiment of the present disclosure, corresponding to the above battery separator, a method for manufacturing a battery separator is further provided.

The manufacturing method includes following steps:
Step S101: providing a dispersion solution in which nanowires are dispersed in a dispersant.

Here, the nanowires are preferably fully dispersed in the dispersant, and the dispersant is generally a poor solvent for the nanowires in order to maintain the structure of the nanowires. Namely, the dispersant does not significantly dissolve the nanowires to destroy their nanostructures.

In addition, the nanowires are also preferably dispersed uniformly in the dispersant, rather than being aggregated in the dispersant. In some examples, the dispersion solution may be selected to be present and used in the form of a suspension liquid, a turbid liquid, or an emulsion.

In some embodiments of the present disclosure, as an example, water is selected and used as the dispersant, and carbon nanotubes are selected as the nanowires. The carbon nanotubes may be uniformly dispersed in water by vibration modes such as ultrasonic treatment and high speed stirring. Generally, the dispersion solution is easily prepared and used on site, which can avoid the problem of uneven distribution of nanowires in the dispersant. However, in some cases without high requirements or for dispersion solutions with good dispersion uniformity and stability, the dispersion solutions may be prepared in advance or outsourced and used. In addition, the nanowires may be contained in the dispersion solution at a concentration of 0.01 to 50 wt%, for example, 0.1 to 43 wt%, 3 to 36 wt%, 14 to 29 wt%, or the like.

The material of the nanowires may be selected as described previously, and therefore will not be described repeatedly here.

In some improved solutions, an adhesive may usually be added to the dispersant in order to improve the bonding strength between the first element and the second element. Moreover, the adhesive is usually compatible with the dispersant. Namely, a phenomenon affecting the uniform distribution of the nanowires, such as a significant delamination will not occur.

For example, in this embodiment, the dispersant may be selected from one or more of water, ethanol, acetone, and N-methylpyrrolidone. Accordingly, the adhesive may be selected from one or more of polyvinyl alcohol, polyacrylonitrile, polyacrylic acid, styrene butadiene rubber, carboxymethyl cellulose, polyvinylidene fluoride, polyvinylpyrrolidone, and polyimide. The adhesive may be contained at a concentration by mass of 0.01 to 49%, 5 to 37%, 11 to 27%, 16 to 20%, or the like.

Further, an auxiliary agent, including glycerin, sodium butylbenzenesulfonate, propylene glycol, and polyoxyethylene sulfide, may be added as a wetter to the dispersant.

Step S102: transferring the dispersion solution to a surface of the second element, and removing the dispersant in the dispersion solution from the surface of the second element so that the nanowires are loaded on the surface of the second element in a layered manner.

Here, the dispersion solution is transferred to the surface of the second element by dip coating method, which includes:
dipping the second element in the dispersion solution at a first given speed and withdrawing the second element from the dispersion solution at a second given speed under a condition where the second element is tensioned by being stretched. When the second element is passing through the dispersion solution, the nanowires in the dispersion solution and/or the optionally added adhesive are bonded to the second element by the actions such as chemical action, adsorption action, and capillary phenomenon; then, removing the dispersant in the dispersion solution from the surface of the second element in an appropriate manner while leaving the nanowires on the surface of the second element.

The dispersion solution is transferred to the second element by a film formation apparatus. The general structure of the film formation apparatus may be depicted below with reference to FIG. 3.

The film formation apparatus includes a liquid storage tank 401 which is configured to store the dispersion solution.

The film formation apparatus includes a tensioning system 402. The tensioning system includes a plurality of rollers. In FIG. 3, the tensioning system includes three rollers, wherein one of the rollers is distributed between the other two rollers, and a triangular shape may be formed by the center points of the projections of the three rollers on a plane. The second element of the battery separator is tensioned by the tensioning system. The tensioning system includes at least one dip coating roller 403 (i.e., the roller located in the middle as described above) configured to dip the second element 200 in the dispersion solution. The dip coating roller is partially or entirely immersed in the dispersion solution (by an immersed depth ranging from 1/4 of its radius to its entirety in one example).

The immersed depth of the dip coating roller may be achieved by a moving mechanism (not shown in the figure), which enables the dip coating roller to move relative to the dispersion solution in an appropriate manner, for example, to move vertically. Also, the tensioning system may properly release the second element so as to adjust the immersed depth of the dip coating roller without moving the positions of the two rollers other than the dip coating roller. Optionally, in some examples, all of the three rollers constituting the tensioning system are movable, so that it is easier to control the adjustment of the immersed depth of the dip coating roller.

The dip coating roller 403 has a hollow cavity 4031, and the dip coating roller has pore channels 4032 communicating with the hollow cavity and extending to its surface. The second element is in contact with the surface of the dip coating roller in such a manner that their surfaces are attached to each other, and the hollow cavity is held at a given vacuum at 0.01 to 0.1 MPa. A vacuum generator configured to generate a desired vacuum degree in the dip coating roller is not shown in the figures, and may be selected from commercially available devices such as a vacuum pump.

In this way, when the second element is passing through the dispersion solution, the dispersion solution is more easily adsorbed by and bonded to the surface of the second element under the action of negative pressure. On the other hand, the porosity, pore size, and pore distribution of the first element can also be adjusted by controlling the pore channels of the dip coating roller to achieve the desired effect.

In addition, the thickness of the first element can be adjusted by adjusting the concentration of the nanowires in the dispersion solution, the immersed depth of the dip coating roller in the dispersion solution, and the vacuum degree of the dip coating roller. The inventors have found that a greater solution concentration results in a thicker coating, a deeper immersed depth results in a thicker coating, and a higher vacuum degree results in a thicker coating.

In addition, it should be noted that, in an embodiment of the present disclosure, the battery separator is a sheet structure having a multilayered film structure, wherein the second element constitutes a base film, and the first element constitutes a surface film. One or a plurality of layers of surface films may be provided. When a plurality of layers of surface films are provided, the surface films may be distributed on the two sides of the base film in the thickness direction and the same or a different number of layers of surface films may be distributed on each side, or the surface films may be distributed on either of the two sides of the base film in the thickness direction.

A number of examples of battery separators are listed in Table 1 below, including their raw materials, process methods, and properties.

**Table 1. Manufacturing and Properties of Battery Separators**

| Group | Substrate Material | Nanowire Material | Dispersant | Roller Speed (m/min) | Immersed Depth (Diameter) | Vacuum Degree (Mpa) | Dispersion Solution Concentration | Thickness (µm) | Thermal Stability at 150 °C for 1 h |
|---|---|---|---|---|---|---|---|---|---|
| Ex. 1 | PE | Carbon | N-methyl pyrrolidone | 30 | 1/4 | 0.05 | 10% | 0.1 | TD 0.1% |
| | | Nanotubes | | | Diameter | | | | MD 0.1 % |
| Ex. 2 | PP | Boron Carbide | Acetone | 20 | 1/4 | 0.1 | 0.1% | 0.01 | TD 0.5% |
| | | Nanowires | | | Diameter | | | | MD 0.5% |
| Ex. 3 | PE | Nanocellulose | Water | 50 | 1/2 | 0.1 | 50% | 0.2 | TD 0.01% |
| | | | | | Diameter | | | | MD 0.1% |
| Ex. 4 | PP | Hydroxyapatite | Ethanol | 10 | Fully | 0..1 | 80% | 0.8 | TD 0.01% |
| | | Nanowires | | | Immersed | | | | MD 0.1% |

Batteries are made by using the battery separators manufactured in the above Examples 1-4, and their electrical properties are tested. The test results are shown in Table 2 below.

**Table 2. Properties of Batteries Using the Battery Separators**

| Battery Separator Type | Separator Coating Thickness (µm) | Thermal Stability of the Separator at 150 °C for 1 h | Battery Capacity Retention Rate (%) |
|---|---|---|---|
| Example 1 (PE) | 0.1 | TD 0.1% | 99 |
| | | MD 0.1% | |
| Example 2 (PP) | 0.01 | TD 0.5% | 98.5 |
| | | MD 0.5% | |
| Example 3 (PE) | 0.2 | TD 0.01% | 99.2 |
| | | MD 0.1% | |
| Example 4 (PP) | 0.8 | TD 0.01% | 99.3 |
| | | MD 0.1% | |
| Comparative Example 1 (PE) | 2 | TD 0.7% | 97 |
| | | MD 1.1% | |
| Comparative Example 2 (PE) | 2 | TD 1% | 97.2 |
| | | MD 1.5% | |
| Comparative Example 3 (PP) | 2 | TD 0.8% | 96.5 |
| | | MD 1.2% | |
| Comparative Example 4 (PP) | 2 | TD 0.9% | 96.8% |
| | | MD 1.3% | |
| Comparative Example 5 (PE) | 0 | TD50% | 93.7% |
| | | MD40% | |
| Comparative Example 6 (PP) | 0 | TD90% | 94.1% |
| | | MD40% | |

In Table 2, the batteries in Examples 1-4 and Comparative Examples 1-6 have the same main structure, each including a positive electrode, a negative electrode, an electrolyte, and a separator.

The main differences between the batteries lie in that the separators of the batteries in Examples 1-4 are made by using the method proposed in the embodiment of the present disclosure and are loaded with nanowire coatings, whereas the separators of the batteries in Comparative Examples 1-4 are commercially available products and loaded with coatings of granular substances of the order of millimeters, and the separators of the batteries of Comparative Examples 5-6 are commercially available products and are not loaded with substances for forming coatings. The substrates of the battery separators in the respective examples and comparative examples, such as polyethylene films and polypropylene films, are all commercially available products. The polyethylene film and the polypropylene film may, for example, be made by a wet non-weaving process.

As can be seen from Tables 1 and 2 above, the battery separators according to the embodiments of the present disclosure are significantly improved in terms of thermal stability, and also the battery capacity retention rates of the batteries using the battery separators are improved to some extent. In Tables 1 and 2 above, TD represents the thermal stability ((heat shrinkage rate) of the separator in the transverse direction, and MD represents the thermal stability (heat shrinkage rate) in the longitudinal direction.

The above description is merely illustrative of optional embodiments of the present disclosure and is not intended to limit the present disclosure. It will be understood by those skilled in the art that various modifications and variations can be made to the present disclosure.

### Industrial Applicability

The battery separator according to the present disclosure has a composite structure, which is an innovation over the prior art battery separators and is improved in terms of thermal stability by using a modification material. Further, the modification material is used in the form of nanowires, which can avoid the problem of an increase in thickness and weight of the separator caused by the introduction of the modification material, thereby achieving the effects of thermal stability, and less increment of thickness and weight of the battery separator.

## Claims

1. A battery separator, having a composite structure comprising a first element (100) and a second element (200), the battery separator comprising:
the first element (100), made of a modification material provided to improve thermal stability of the battery separator, wherein the first element (100) is a stack of nanowires distributed in one or more layers; and
the second element (200) made of a base material provided as a main body of the battery separator, wherein the first element (100) is loaded on the second element (200) and supported by the second element (200);
**characterized in that** the first element (100) has a thickness of 0.01 to 0.8 µm, the nanowire has a length-to-diameter ratio of greater than 50, the nanowire has a diameter of 1 to 100 nm and a length of 0.1 to 100 µm;
the modification material comprises one or more of a carbon nanotube, a silver nanowire, a boron carbide nanowire, nanocellulose, a copper hydroxide nanowire and a silicon monoxide nanowire; and
the base material is an organic polymer material, the organic polymer material comprises polyolefin.

2. The battery separator according to claim 1, wherein the polyolefin comprises polyethylene.

3. The battery separator according to claim 1, wherein the first element (100) is in a porous structure (300).

4. A method for manufacturing a battery separator of claim 1, wherein the manufacturing method comprises steps of:
providing a dispersion solution in which the nanowires are dispersed in a dispersant; and
transferring the dispersion solution onto a surface of the second element (200), and removing the dispersant in the dispersion solution from the surface of the second element (200) so that the nanowires are loaded on the surface of the second element (200) in the layered manner;
**characterized in that** the dispersed solution is transferred to the surface of the second element (200) by dip coating, and the dip coating method comprises:
dipping the second element (200) into the dispersion solution at a first given speed and withdrawing the second element (200) from the dispersion solution at a second given speed under a condition where the second element (200) is tensioned by being stretched,
the second element (200) is tensioned by a tensioning system (402) consisting of a plurality of rollers, wherein the tensioning system (402) has at least one dip coating roller (403) configured to dip the second element (200) into the dispersion solution, and the dip coating roller (403) is partially or entirely immersed in the dispersion solution;
the dip coating roller (403) has a hollow cavity (4031), and the dip coating roller (403) has pore channels (4032) communicating with the hollow cavity (4031) and extending to its surface, the second element (200) is in contact with the surface of the dip coating roller (403) in such a manner that the surface of the dip coating roller (403) and the surface of the second element (200) are attached to each other, and the hollow cavity (4031) is held at a given vacuum degree, and the vacuum degree is 0.01 to 0.1 MPa.

5. The method for manufacturing a battery separator according to claim 4, wherein the dispersant comprises one or more of water, ethanol, acetone, and N-methylpyrrolidone; and
the dispersion solution further contains an adhesive; preferably, the adhesive comprises one or more of polyvinyl alcohol, polyacrylonitrile, polyacrylic acid, styrene butadiene rubber, carboxymethyl cellulose, polyvinylidene fluoride, polyvinylpyrrolidone, and polyimide; and more preferably, the dispersion solution further comprises an auxiliary agent.

6. The method for manufacturing a battery separator according to claim 4 or 5, wherein mass concentration of the nanowires in the dispersion solution is 0.01 to 50% and mass concentration of the adhesive is 0.01 to 49%.

7. The method for manufacturing a battery separator according to any one of claims 4 to 6, wherein the dispersion solution is transferred to the surface of the second element (200) by means of coating, and preferably, the coating comprises spin coating, or blade coating, or dip coating.

8. A battery, **characterized by** having the battery separator according to any one of claim 1 to 3,
preferably, the battery is a lithium ion battery.

9. The battery according to claim 8, wherein the lithium ion battery is a rechargeable lithium ion battery; and
the battery comprises a housing in which the battery separator and positive and negative electrodes separated by the battery separator are disposed; a positive electrode region is formed between the positive electrode and the battery separator, and a negative electrode region is formed between the negative electrode and the battery separator.

10. The battery according to claim 9, wherein same electrolyte is injected into the positive electrode region and the negative electrode region.

## Patentansprüche

1. Batterieseparator mit einer Verbundstruktur, die ein erstes Element (100) und ein zweites Element (200) umfasst, wobei der Batterieseparator Folgendes umfasst:
das erste Element (100), das aus einem Modifikationsmaterial hergestellt ist, das zur Verbesserung der thermischen Stabilität des Batterieseparators vorgesehen ist, wobei das erste Element (100) ein Stapel von Nanodrähten ist, die in einer oder mehreren Schichten verteilt sind; und
das zweite Element (200), das aus einem Basismaterial hergestellt ist, das als Hauptkörper des Batterieseparators vorgesehen ist, wobei das erste Element (100) auf das zweite Element (200) aufgebracht ist und vom zweiten Element (200) abgestützt wird;
**dadurch gekennzeichnet, dass** das erste Element (100) eine Dicke von 0,01 bis 0,8 µm aufweist, der Nanodraht ein Durchmesser-Längenverhältnis von mehr als 50 aufweist, der Nanodraht einen Durchmesser von 1 bis 100 nm und eine Länge von 0,1 bis 100 µm aufweist;
das Modifikationsmaterial eines oder mehrere der folgenden Materialien umfasst: Kohlenstoff-Nanoröhrchen, Silber-Nanodraht, Borcarbid-Nanodraht, Nanocellulose, Kupferhydroxid-Nanodraht und Siliciummonoxid-Nanodraht; und
das Basismaterial ein organisches Polymermaterial ist, wobei das organische Polymermaterial Polyolefin umfasst.

2. Batterieseparator nach Anspruch 1, wobei das Polyolefin Polyethylen umfasst.

3. Batterieseparator nach Anspruch 1, wobei das erste Element (100) in poröser Struktur (300) vorliegt.

4. Verfahren zum Herstellen eines Batterieseparators nach Anspruch 1, wobei das Herstellungsverfahren folgende Schritte umfasst:
Bereitstellen einer Dispersionslösung, in der die Nanodrähte in einem Dispersionsmittel dispergiert sind; und
Übertragen der Dispersionslösung auf eine Oberfläche des zweiten Elements (200) und Entfernen des Dispersionsmittels in der Dispersionslösung von der Oberfläche des zweiten Elements (200), sodass die Nanodrähte auf die Oberfläche des zweiten Elements (200) in der geschichteten Weise aufgetragen werden;
**dadurch gekennzeichnet, dass** die Dispersionslösung durch Tauchbeschichtung auf die Oberfläche des zweiten Elements (200) übertragen wird, und das Tauchbeschichtungsverfahren umfasst:
Eintauchen des zweiten Elements (200) in die Dispersionslösung mit einer ersten vorgegebenen Geschwindigkeit und Herausziehen des zweiten Elements (200) aus der Dispersionslösung mit einer zweiten vorgegebenen Geschwindigkeit unter einer Bedingung, bei der das zweite Element (200) durch Strecken gespannt wird,
wobei das zweite Element (200) durch ein Spannsystem (402) gespannt wird, das aus einer Vielzahl von Walzen gebildet ist, das Spannsystem (402) zumindest eine Tauchbeschichtungswalze (403) aufweist, die zum Eintauchen des zweiten Elements (200) in die Dispersionslösung konfiguriert ist, und die Tauchbeschichtungswalze (403) teilweise oder vollständig in die Dispersionslösung eingetaucht wird;
die Tauchbeschichtungswalze (403) einen Hohlraum (4031) aufweist, und die Tauchbeschichtungswalze (403) Porenkanäle (4032) aufweist, die mit dem Hohlraum (4031) in Verbindung stehen und sich bis zu deren Oberfläche erstrecken, wobei das zweite Element (200) mit der Oberfläche der Tauchbeschichtungswalze (403) derart in Kontakt steht, dass die Oberfläche der Tauchbeschichtungswalze (403) und die Oberfläche des zweiten Elements (200) aneinander befestigt sind, und der Hohlraum (4031) bei einem bestimmten Vakuumgrad gehalten wird, und der Vakuumgrad 0,01 bis 0,1 MPa beträgt.

5. Verfahren zum Herstellen eines Batterieseparators nach Anspruch 4, wobei das Dispersionsmittel Wasser, Ethanol, Aceton und/oder N-Methylpyrrolidon aufweist; und
die Dispersionslösung ferner vorzugsweise einen Klebstoff enthält; der Klebstoff Polyvinylalkohol, Polyacrylnitril, Polyacrylsäure, Styrol-Butadien-Kautschuk, Carboxymethylcellulose, Polyvinylidenfluorid, Polyvinylpyrrolidon und/oder Polyimid aufweist; und die Dispersionslösung noch bevorzugter ferner einen Hilfsstoff aufweist.

6. Verfahren zum Herstellen eines Batterieseparators gemäß Anspruch 4 oder 5, wobei eine Massenkonzentration der Nanodrähte in der Dispersionslösung 0,01 bis 50 % und eine Massenkonzentration des Klebstoffs 0,01 bis 49 % beträgt.

7. Verfahren zur Herstellung eines Batterieseparators nach einem der Ansprüche 4 bis 6, wobei die Dispersionslösung mittels Beschichtung auf die Oberfläche des zweiten Elements (200) übertragen wird, und die Beschichtung vorzugsweise eine Schleuderbeschichtung, eine Rakelbeschichtung oder eine Tauchbeschichtung umfasst.

8. Batterie, **dadurch gekennzeichnet, dass** diese den Batterieseparator gemäß einem der Ansprüche 1 bis 3 aufweist,
wobei die Batterie vorzugsweise eine Lithium-Ionen-Batterie ist.

9. Batterie nach Anspruch 8, wobei die Lithium-Ionen-Batterie eine wiederaufladbare Lithium-Ionen-Batterie ist; und
die Batterie ein Gehäuse umfasst, in dem der Batterieseparator und positive und negative Elektroden, die durch den Batterieseparator getrennt sind, angeordnet sind; wobei ein positiver Elektrodenbereich zwischen der positiven Elektrode und dem Batterieseparator ausgebildet ist und ein negativer Elektrodenbereich zwischen der negativen Elektrode und dem Batterieseparator ausgebildet ist.

10. Batterie nach Anspruch 9, wobei derselbe Elektrolyt in den positiven Elektrodenbereich und den negativen Elektrodenbereich eingespritzt wird.

## Revendications

1. Séparateur de batterie, ayant une structure composite comprenant un premier élément (100) et un deuxième élément (200), le séparateur de batterie comprenant :
le premier élément (100), constitué d'un matériau de modification prévu pour améliorer la stabilité thermique du séparateur de batterie, dans lequel le premier élément (100) est un empilement de nanofils répartis en une ou plusieurs couches ; et
le deuxième élément (200) constitué d'un matériau de base se présentant sous la forme d'un corps principal du séparateur de batterie, dans lequel le premier élément (100) est chargé sur le deuxième élément (200) et supporté par le deuxième élément (200) ;
**caractérisé en ce que** le premier élément (100) a une épaisseur de 0,01 à 0,8 µm, le nanofil a un rapport longueur-diamètre supérieur à 50, le nanofil a un diamètre de 1 à 100 nm et une longueur de 0,1 à 100 µm ;
le matériau de modification comprend un ou plusieurs parmi un nanotube de carbone, un nanofil d'argent, un nanofil de carbure de bore, une nanocellulose, un nanofil d'hydroxyde de cuivre et un nanofil de monoxyde de silicium ; et
le matériau de base est un matériau polymère organique, le matériau polymère organique comprend une polyoléfine.

2. Séparateur de batterie selon la revendication 1, dans lequel la polyoléfine comprend du polyéthylène.

3. Séparateur de batterie selon la revendication 1, dans lequel le premier élément (100) est dans une structure poreuse (300).

4. Procédé de fabrication d'un séparateur de batterie selon la revendication 1, dans lequel le procédé de fabrication comprend les étapes suivantes :
la fourniture d'une solution de dispersion dans laquelle les nanofils sont dispersés dans un dispersant ; et
le transfert de la solution de dispersion sur une surface du deuxième élément (200) et le retrait du dispersant dans la solution de dispersion de la surface du deuxième élément (200) de sorte que les nanofils soient chargés sur la surface du deuxième élément (200) par superposition ;
**caractérisé en ce que** la solution dispersée est transférée sur la surface du deuxième élément (200) par dépôt par trempage, et le procédé de dépôt par trempage comprend :
le trempage du deuxième élément (200) dans la solution de dispersion à une première vitesse donnée et le retrait du deuxième élément (200) de la solution de dispersion à une deuxième vitesse donnée dans une condition dans laquelle le deuxième élément (200) est tendu en étant étiré,
le deuxième élément (200) est tendu par un système de tension (402) constitué d'une pluralité de rouleaux, dans lequel le système de tension (402) présente au moins un rouleau de dépôt par trempage (403) configuré pour tremper le deuxième élément (200) dans la solution de dispersion, et le rouleau de dépôt par trempage (403) est partiellement ou entièrement immergé dans la solution de dispersion ;
le rouleau de dépôt par trempage (403) présente une cavité creuse (4031), et le rouleau de dépôt par trempage (403) présente des canaux de pores (4032) communiquant avec la cavité creuse (4031) et s'étendant vers sa surface, le deuxième élément (200) est en contact avec la surface du rouleau de dépôt par trempage (403) de telle manière que la surface du rouleau de dépôt par trempage (403) et la surface du deuxième élément (200) sont fixées l'une à l'autre, et la cavité creuse (4031) est maintenue à un degré de vide donné, et le degré de vide est de 0,01 à 0,1 MPa.

5. Procédé de fabrication d'un séparateur de batterie selon la revendication 4, dans lequel le dispersant comprend un ou plusieurs parmi l'eau, l'éthanol, l'acétone et la N-méthylpyrrolidone ; et
la solution de dispersion contient en outre un adhésif ; de préférence, l'adhésif comprend un ou plusieurs parmi un alcool polyvinylique, un polyacrylonitrile, un acide polyacrylique, un caoutchouc styrène-butadiène, une carboxyméthylcellulose, un fluorure de polyvinylidène, une polyvinylpyrrolidone et un polyimide ; et de manière davantage préférée, la solution de dispersion comprend en outre un agent auxiliaire.

6. Procédé de fabrication d'un séparateur de batterie selon la revendication 4 ou 5, dans lequel une concentration massique des nanofils dans la solution de dispersion est de 0,01 % à 50 % et une concentration massique de l'adhésif est de 0,01 % à 49 %.

7. Procédé de fabrication d'un séparateur de batterie selon l'une quelconque des revendications 4 à 6, dans lequel la solution de dispersion est transférée sur la surface du deuxième élément (200) au moyen d'un dépôt, et de préférence, le dépôt comprend un dépôt à la tournette ou un couchage à la lame ou un dépôt par trempage.

8. Batterie, **caractérisée en ce qu'**elle présente le séparateur de batterie selon l'une quelconque des revendications 1 à 3,
de préférence, la batterie est une batterie au lithium-ion.

9. Batterie selon la revendication 8, dans laquelle la batterie au lithium-ion est une batterie au lithium-ion rechargeable ; et
la batterie comprend un boîtier dans lequel sont disposés le séparateur de batterie et des électrodes positive et négative séparées par le séparateur de batterie ; une région d'électrode positive est formée entre l'électrode positive et le séparateur de batterie, et une région d'électrode négative est formée entre l'électrode négative et le séparateur de batterie.

10. Batterie selon la revendication 9, dans laquelle un même électrolyte est injecté dans la région d'électrode positive et la région d'électrode négative.
